# EUROPÄISCHE PATENTSCHRIFT

(11) **EP 1 226 545 B1**
(45) Veröffentlichungstag und Bekanntmachung des Hinweises auf die Patenterteilung: **21.05.2003**
(21) Anmeldenummer: 00990508.4
(22) Anmeldetag: 20.10.2000
(51) Int. Cl.: G06K 11/08

(54) **ANORDNUNG ZUR DETEKTION EINES OBJEKTS AUF BZW. VOR EINER OBERFLÄCHE**
ASSEMBLY FOR DETECTING AN OBJECT ON OR IN FRONT OF A SURFACE
DISPOSITIF DE DETECTION D'UN OBJET SUR OU DEVANT UNE SURFACE

(30) Priorität: 25.10.1999 DE 19951320
(43) Veröffentlichungstag der Anmeldung: 31.07.2002
(73) Patentinhaber: SIEMENS AKTIENGESELLSCHAFT, 80333 München (DE)
(72) Erfinder: KANITZ, Andreas, 91315 Höchstadt (DE); BERNDS, Adolf, 91083 Baiersdorf (DE); MAGGIONI, Christoph, 81541 München (DE); RÖTTGER, Hans, 80802 München (DE); SIMMERER, Jürgen ,Dr., 82256 Fürstenfeldbruck (DE)
(86) Internationale Anmeldenummer: DE0003717
(87) Internationale Veröffentlichungsnummer: WO01031561

(56) Entgegenhaltungen:
- DE-A- 19 708 240
- WELLNER P: "THE DIGITALDESK CALCULATOR: TANGIBLE MANIPULATION ON A DESK TOP DISPLAY" UIST '91. 4TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. HILTON HEAD, SC, NOV. 11 - 13, 1991, ACM SYMPOSIUM ON USER INTERFACE SOFTWARE AND TECHNOLOGY, NEW YO, 11. November 1991 (1991-11-11), Seiten 27-33, XP000315063
- PAVLOVIC V I ET AL: "VISUAL INTERPRETATION OF HAND GESTURES FOR HUMAN-COMPUTER INTERACTION: A REVIEW" IEEE TRANSACTIONS ON PATTERN ANALYSIS AND MACHINE INTELLIGENCE, IEEE INC. NEW YORK, US, Bd. 19, Nr. 7, 1. Juli 1997 (1997-07-01), Seiten 677-695, XP000698168 ISSN: 0162-8828

## Beschreibung

Die Erfindung betrifft eine Anordnung zur Detektion eines Objekts auf bzw. vor einer Oberfläche.

Eine solche Anordnung ist aus US-A-5528263 [1] bekannt. Dabei handelt es sich insbesondere bei dem zu erkennenden Objekt um eine Zeigereinheit, z.B. eine Hand oder einen Zeigestab. Mit der Zeigereinheit kann ein Benutzer mit einer graphischen Schnittstelle interagieren, indem er durch Gestenbedienung die entsprechenden Aktionen auslöst. Solch eine Anordnung wird auch als Gestik-Computer oder als "Virtual-Touch-Screen" bezeichnet.

Die Funktionsweise des Virtual-Touch-Screens besteht darin, daß die Schnittstelle auf eine vorgegebene Fläche projiziert wird, wobei die Projektion vorzugsweise virtuelle Schaltflächen aufweist, deren Betätigung jeweils vorgegebene Aktionen auslöst. Ein Auslösemechanismus ist das Zeigen des Benutzers mit seiner Hand als Zeigereinheit auf eine der Schaltflächen. Nach einer vorgegebenen Zeitdauer des Zeigens wird die mit der Schaltfläche assoziierte Aktion ausgelöst. Die Position der Hand des Benutzers wird von einer Kamera aufgenommen, die Aufnahme wird digitalisiert und ein Rechner ermittelt die Position der Hand in Relation zu der Projektion. So kann festgestellt werden, ob eine virtuelle Schaltfläche bedient worden ist oder nicht. Dieser Auslösemechanismus kann in seiner Wirkung verglichen werden mit der Bedienung einer Computermaus als Eingabemedium für eine graphische Schnittstelle. Der Mauszeiger wird bei dem Virtual-Touch-Screen mit der Hand geführt, ausgelöst wird statt des Doppelklicks mit dem Verharren der Hand über einer ausgesuchten Schaltfläche für eine vorgegebene Mindestdauer.

Zur Erkennung des Zeigegegenstandes auf der Bedienoberfläche, bzw. zur Unterscheidung der Projektion von dem Zeigegegenstand, wird in dem Dokument DE-A-197 08 240 [2], welches die Basis für die Präambel des Anspruchs 1 darstellt, die Möglichkeit einer zusätzlichen Beleuchtung der Bedienoberfläche mit Wellen im nichtsichtbaren Spektralbereich vorgestellt. Anhand der Beleuchtung der Bedienoberfläche mit Wellen im nichtsichtbaren Spektralbereich kann eine geeignete Unterscheidung der Projektion von der Zeigereinheit erfolgen. Bei einer Beleuchtung mit infrarotem Licht reflektiert die Bedienoberfläche das infrarote Licht stärker als die Zeigeeinheit (Hand). Der Hand kommt somit eine höhere Absorption zu als der Bedienoberfläche. Dieser Effekt läßt sich gemäß [2] dadurch verstärken, daß die Bedienoberfläche zusätzlich mit einer reflektierenden Schicht versehen ist, so daß die Absorption des infraroten Lichts auf der Bedienoberfläche möglichst gering ist. Die Hand erscheint somit dunkel vor der Bedienoberfläche.

Nun ist es von Nachteil, daß bei nicht speziell beschichteter Bedienoberfläche die Zeigereinheit, insbesondere Hand, von der Projektion nur schwer unterschieden werden kann. Dieser Effekt wird zusätzlich dadurch erschwert, daß bei einer nicht ebenen Bedienoberfläche die Reflexionen äußerst unterschiedlich sind und dadurch oftmals eine Verwechslung der Zeigereinheit mit der Projektion erfolgen kann. Insbesondere unter Einfluß von Fremdlicht (Störlicht), z.B. Sonnenlicht oder künstlicher Raumbeleuchtung, kann es zu signifikanten Störungen kommen. Dabei sind zeitlich wechselnde Reflexionen nicht kompensierbar und verschlechtern somit deutlich die Erkennungsergebnisse.

Die Aufgabe der Erfindung besteht darin, ein Objekt auf bzw. vor einer Oberfläche zu detektieren, wobei die Oberfläche insbesondere unterschiedliche Strukturen aufweisen kann.

Die Aufgabe wird gemäß der Merkmale des unabhängigen Patentanspruchs gelöst. Weiterbildungen ergeben sich auch aus den abhängigen Ansprüchen.

Zur Lösung der Aufgabe wird eine Anordnung zur Detektion eines Objekts auf bzw. vor einer Oberfläche angegeben, bei der eine Empfangseinrichtung vorgesehen ist, die derart eingerichtet ist, daß sie das Objekt und die Oberfläche aufnimmt. Diese Aufnahme wird von einem Rechner weiterverarbeitet derart, daß von dem Objekt reflektierte Wellen von Wellen unterscheidbar sind, die von der Oberfläche selbst reflektiert werden, wobei die Oberfläche eine höhere Absorption der Wellen aufweist als das Objekt. Das Objekt wird auf bzw. vor der Oberfläche anhand des Rechners detektiert.

Dabei sind insbesondere die Wellen hinsichtlich ihrer Intensität zu unterscheiden.

Hierbei ist es von Vorteil, daß das Objekt in der Empfangseinrichtung heller erscheint als die Oberfläche und somit von dieser, auch bei Störlichteinfluß, deutlich unterscheidbar ist. Der Rechner ist bevorzugt ausgeführt als eine Prozessoreinheit, auf der ein Programm zur Mustererkennung bzw. Musterunterscheidung läuft. Eine solche Mustererkennung bzw. Musterunterscheidung ist möglich, weil das Objekt entsprechend hell vor dunklem Hintergrund aufgenommen wird und somit leicht von der Oberfläche separierbar ist.

Eine Ausgestaltung besteht darin, daß eine Einheit zur Beleuchtung der Oberfläche vorgesehen ist. Die Einheit emittiert dabei Wellen im nichtsichtbaren Spektralbereich. Insbesondere kann eine Lichtquelle im Infrarotbereich vorgesehen sein. Beispiele für solche Lichtquellen sind Infrarot-Leuchtdioden oder Glühbirnen mit Infrarotfilter (infrarotdurchlässig).

Insbesondere ist es eine Ausgestaltung, daß die Empfangseinrichtung eine Kamera ist. Bevorzugt kann hier eine Digitalkamera eingesetzt werden, die ein digitalisiertes Bild an den Rechner liefert. Alternativ ist auch eine herkömmliche analoge Kamera einsetzbar, wobei das analoge Bild (Aufnahme) zur Weiterverarbeitung in dem Rechner vorher digitalisiert wird.

Eine andere Weiterbildung besteht darin, daß die Empfangseinrichtung ein Filter, der nur für Infrarot-Licht durchlässig ist, aufweist. In diesem Fall ist gerade im Zusammenspiel mit der Infrarotlichtquelle eine speziell in deren Emissionsspektrum empfindliche Aufnahme möglich.

Auch ist es eine Weiterbildung, daß ein Projektor vorgesehen ist, der ein Videobild auf die Oberfläche projiziert. Dabei kann bevorzugt das Videobild eine Bedienoberfläche, insbesondere eine graphische Bedienoberfläche (GUI = "Graphical User Interface") darstellen.

In einer anderen Ausgestaltung ist das Objekt eine Eingabekomponente für die Bedienoberfläche. Dabei ist zweckmäßig das Objekt eine Hand eines Benutzers oder ein Finger des Benutzers, oder eine Zeigereinheit. In solch einer Konfiguration ist es möglich, daß der Benutzer mit seiner Hand, seinem Finger oder der Zeigereinheit eine Eingabe auf der graphischen Benutzeroberfläche vornimmt. Hierzu kann bevorzugt mit der Hand über die Bedienoberfläche verfahren werden, wobei sich durch die Bewegung der Hand ein Mauszeiger steuern läßt. Eine Auslösung einer vorgegebenen Aktion auf der Bedienoberfläche kann beispielsweise durch ein Verweilen der Hand für eine vorgegebene Zeit auf einer bestimmten Stelle der Projektion, hier der Bedienoberfläche, begründet sein. Durch dieses Verweilen wird die Aktion ausgelöst, bei bekannten Bedienoberflächen, die über eine Maus bedient werden, entspricht dies einem Doppelklick. Demnach ist eine vollständige Nutzung der Bedienoberfläche mittels Geste (Hand) möglich. Hierbei sei angemerkt, daß die Erkennung der Hand vor der Bedienoberfläche insbesondere durch die höhere Absorption der Oberfläche - auch unter Fremdlichteinfluß - gut möglich ist.

Ferner kann neben der absorbierenden Oberfläche eine reflektierende Oberfläche vorgesehen sein, die insbesondere als Projektionsfläche für die Bedienoberfläche dient. Auf dieser Bedienoberfläche werden zweckmäßig bestimmte mit Aktionen kombinierte Flächen projiziert, die anhand der oben beschriebenen Gestenbedienung auslösbar sind. Der Vorteil bei der Projektion auf eine reflektierende Oberfläche (reflektierend insbesondere im sichtbaren Spektralbereich oder im Spektralbereich der Projektion) besteht darin, daß für den Benutzer in so einem Fall die Bedienoberfläche gut erkennbar ist.

Hierbei sei angemerkt, daß die Oberfläche insbesondere in zwei verschiedenen Wellenlängenbereichen unterschiedliche Eigenschaften aufweist: So ist sie in einem infraroten Spektralbereich absorbierend und in einem sichtbaren Bereich reflektierend ausgeführt. Damit weist die Oberfläche bei mindestens einer von der Lichtquelle emittierten Wellenlänge eine höhere Absorption auf als das zu erkennende Objekt.

Dieser Effekt wird durch die Beleuchtung mit einer Eigenlichtquelle zusätzlich verstärkt, die insbesondere Licht in einem Spektralbereich emittiert, der möglichst dem Spektralbereich der absorbierenden Oberfläche entspricht.

Eine weitere Ausgestaltung besteht darin, daß die Oberfläche eine dreidimensionale Struktur aufweist. Insbesondere da die Oberfläche eine höhere Absorption der auf sie treffenden Wellen aufweist, kann dadurch eine dreidimensionale Struktur durchgängig als von der Kamera dunkle Fläche erkennbar ausgeführt werden. Dies spielt insbesondere eine Rolle, wenn die dreidimensionale Struktur deutliche Hebungen und Senkungen aufweist und vorzugsweise mit einer Absorptionsschicht überzogen ist.

Eine Ausgestaltung besteht darin, daß die Absorptionsschicht mindestens eines der folgenden Elemente umfaßt:
a) Glas;
b) Keramik;
c) Kunststoffe;
d) Farbstoffe;
e) organische Pigmente;
f) anorganische Pigmente.

Auch ist es eine Ausgestaltung, daß das Emissionsspektrum der Infrarotlichtquelle auf das Spektrum der Absorption angepaßt ist. Dadurch ist eine besonders deutliche Trennung des Objektes vor der Oberfläche bzw. der mit Strukturen versehenen Oberfläche möglich.

Ausführungsbeispiele der Erfindung werden nachfolgend anhand der Zeichnungen dargestellt und erläutert.

Es zeigen
- Fig.1: eine Anordnung zur Interaktion mit einem Computer;
- Fig.2: eine Prozessoreinheit
- Fig.3: eine Anordnung zur Interaktion mit einem Computer in einer Umgebung von Strukturen;
- Fig.4: eine Anordnung zur Erkennung von Objekten in einer Umgebung von Strukturen, kombiniert mit integrierter Bildprojektion und videobasierter Bilderkennung;
- Fig.5: eine chemische Grundstruktur von Indaminfarbstoffen;
- Fig.6: eine chemische Grundstruktur einer Polymer-Matrix;
- Fig.7: eine chemische Grundstruktur von 1,3,2-Dioxaborin-Ringe enthaltenden Polymethinfarbstoffen;
- Fig.8: chemische Strukturen von 1,3,2-Dioxaborin-Ringe enthaltenden Polymethinfarbstoffen.

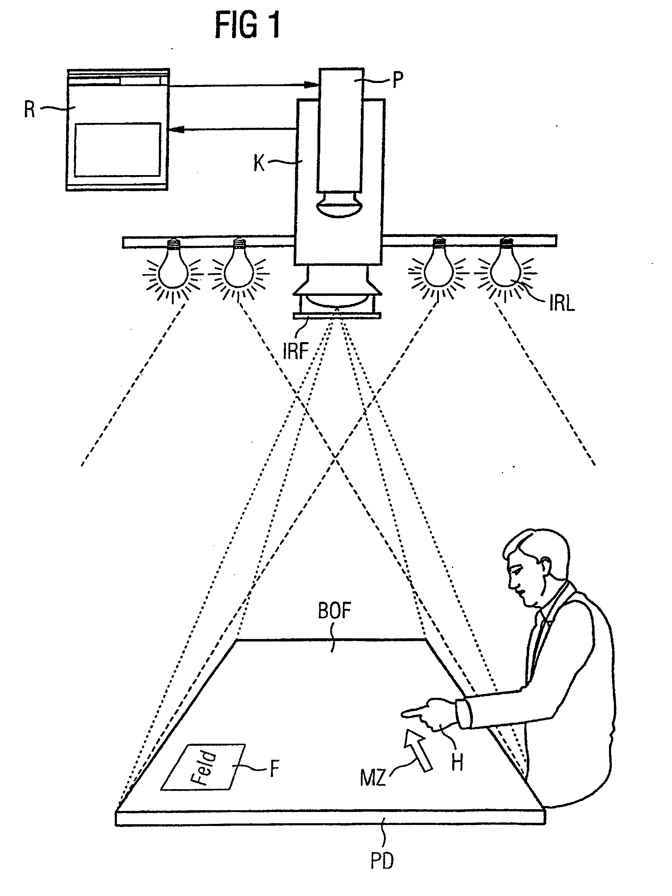

In **Fig.1** wird eine Anordnung zur Interaktion mit einem Computer (Virtual-Touch-Screen) beschrieben. Eine Interaktionsfläche (graphische Bedienoberfläche BOF) wird auf einen vorgebbaren Bereich (Oberfläche), hier ein Projektionsdisplay PD (Interaktionsfläche), abgebildet. Das Projektionsdisplay PD ersetzt dabei einen konventionellen Bildschirm. Die Eingabe erfolgt durch direktes Zeigen mit der Interaktionskomponente, hier einer Hand H auf die Bedienoberfläche BOF. Dadurch können beispielsweise Tastatur, Maus, Touchscreen oder Digitalisiertablett konventioneller Systeme ersetzt werden. Die Erkennung der Gesten und die Positionierung der Hand innerhalb der Bedienoberfläche BOF werden durch ein videobasiertes System, das in der Lage ist, Projektion und Form zum Beispiel der menschlichen Hand in Echtzeit zu erkennen und zu verfolgen, realisiert. Ferner wird in Fig.1 das Projektionsdisplay PD mit Infrarotlicht. beleuchtet. Die Infrarotlichtquelle IRL kann vorteilhaft mittels Infrarotleuchtdioden ausgeführt sein. Eine Kamera K, die vorzugsweise mit einem speziellen Infrarotfilter IRF, der in einem infraroten Spektralbereich besonders durchlässig ist, ausgestaltet ist, nimmt das Projektionsdisplay PD einschließlich der Hand H des Benutzers auf. Mit einem Projektor P, der von einem Rechner R gesteuert wird, wird die Bedienoberfläche BOF auf das Projektionsdisplay PD abgebildet. Die Bedienoberfläche BOF kann dabei ausgestaltet sein als ein graphische Benutzerschnittstelle (GUI) auf einem Monitor des Rechners R. Ein Mauszeiger MZ wird durch die Hand H des Benutzers bewegt. Anstelle der Hand H kann als Interaktionskomponente auch eine Zeigereinheit eingesetzt werden.

Soll auf der Bedienoberfläche BOF die mit der Betätigung eines Feldes F assoziierte Funktion bzw. Funktionalität ausgelöst werden, so wird die Hand H zu dem Feld F bewegt, der Mauszeiger MZ folgt dabei der Hand H. Verharrt die Hand H für eine vorgebbare Zeitdauer über dem Feld F, so wird die mit dem Feld F assoziierte Funktion auf dem Rechner R ausgelöst. Dies entspricht bei konventionellen Systemen dem Doppelklick mit der Maus, wenn sich der Mauszeiger über einem virtuellen Schalter befindet.

Insbesondere ist die Oberfläche, hier die Bedienoberfläche BOF mit einer Absorptionsschicht überzogen. Durch die Beleuchtung mit infrarotem Licht IRL erscheint auf dem von der Kamera K aufgenommenen und digitalisierten Bild im Rechner R die Hand H des Benutzers hell gegenüber dem Hintergrund, der Oberfläche BOF. Dieser Effekt verstärkt sich vor allem dadurch, daß die Absorptionsschicht in dem Spektralbereich besonders wirksam ist, indem die Beleuchtung mit infrarotem Licht IRL geschieht. Dadurch ergibt sich eine klare Trennbarkeit der Hand H von dem Hintergrund BOF (insbesondere durch die unterschiedlichen Wellenlängen).

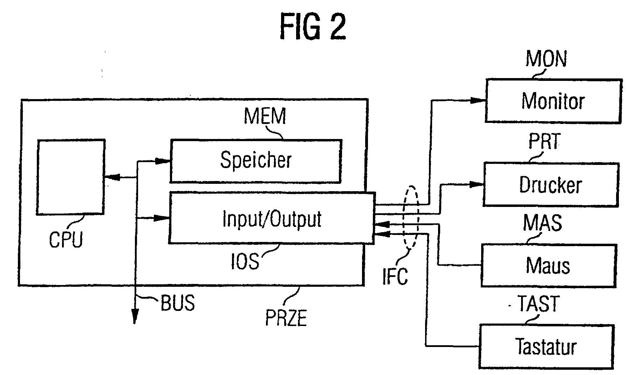

In **Fig.2** ist eine Prozessoreinheit PRZE dargestellt. Die Prozessoreinheit PRZE umfaßt einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON, insbesondere einen Projektor, sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte), Kamera, Framegrabber, Detektionseinheit, Eingabevorrichtungen, Netzwerkanschlüsse oder Scanner.

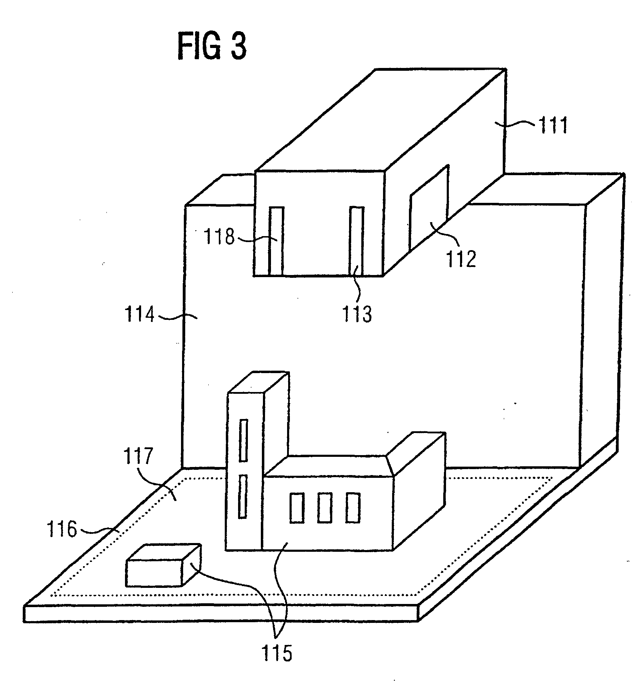

**Fig.3** zeigt eine Anordnung zur Interaktion mit einem Computer in einer Umgebung von dreidimensionalen Strukturen. Eine Modulbox 111 umfaßt den Rechner 112 (Prozessoreinheit), die Kamera 113 and die Infrarotlichtquelle 118 (Eigenlichtquelle). Eine Fläche 114 eignet sich zur Informationsdarstellung. Auf einer Oberfläche 117, die auf einer Grundplatte 116 angeordnet ist, befinden sich mehrere Strukturen 115. Die Strukturen 115 sind beispielsweise dreidimensionale Modelle. In Fig.3 wird die Hand des Benutzers in den Bereichen der Strukturen 115 und der Oberfläche 117 erkannt. Im Bereich der Informationsdarstellung (siehe Fläche 114) findet keine Bilderfassung statt. Dadurch können Bilderfassung und Informationsdarstellung (Projektion) räumlich voneinander getrennt werden. Die Strukturen 115 sind vorzugsweise mit einer Absorptionsschicht überzogen, ebenso die Oberfläche 117. Dadurch wird die sich durch den von der Kamera 113 erfaßten Bereich bewegende Hand sowohl auf bzw. vor der Oberfläche 117 als auch von den Strukturen 115 deutlich unterscheidbar erkannt, da die Hand eine stärkere Reflexion des von der Lichtquelle 118 emittierten Lichtes gewährleistet als die Oberfläche 117 oder die Strukturen 115. Die Hand ist somit auf dem digitalisierten Bild hell vor dunklem Hintergrund. Die Absorption liegt bevorzugt im infraroten Spektralbereich, insbesondere in einem Spektralbereich zwischen 750nm und 1100nm. Als Folge der beschriebenen Anordnung wird besonders vorteilhaft von den Strukturen 115 bzw. der Oberfläche 117 auch Fremdlicht absorbiert, was dazu führt, daß Fremdlicht keinen störenden Effekt bei der Erkennung der Hand bedingt.

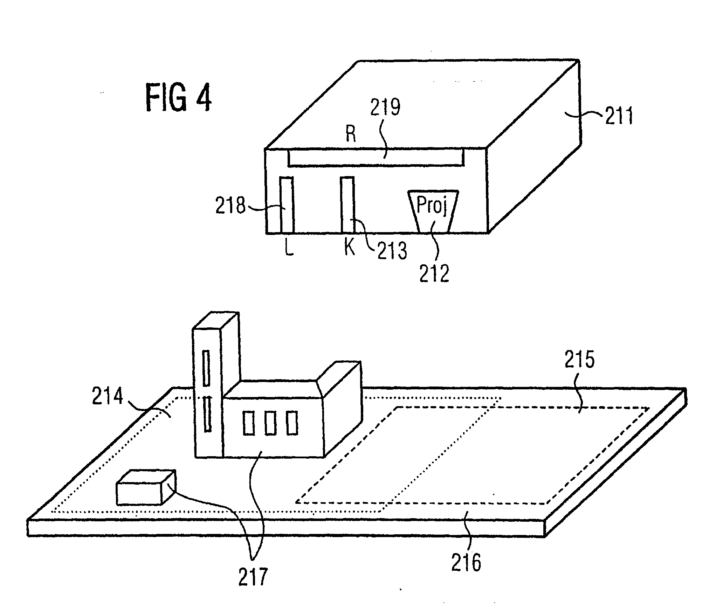

Fig.4 zeigt eine Anordnung zur Erkennung von Objekten in einer Umgebung von Strukturen, kombiniert mit integrierter Bildprojektion und videobasierter Bilderkennung. Eine Modulbox 211 umfaßt einen Projektor 212, eine Kamera 213, eine Lichtquelle 218 (Eigenlichtquelle, insbesondere IRL aus Fig.1) und einen Rechner 219. Auf einer Grundplatte 216 befinden sich ein von der Kamera 213 erfaßter Bereich 214 und eine Projektionsfläche 215, auf der ein vom Rechner 219 vorgegebenes Bild über den Projektor 212 dargestellt wird. Insbesondere die von der Kamera 213 erfaßte Fläche 214 wird mittels Lichtquelle 218 beleuchtet. Auf der Oberfläche 214 befinden sich zwei Strukturen 217, die dreidimensional ausgestaltet sind. Die Kamera 213 weist bei mindestens einer von der Eigenlichtquelle 218 emittierten Wellenlänge eine zur Bilderkennung ausreichenden Sensitivität auf. Die detektierte Wellenlänge liegt bevorzugt im nichtsichtbaren Spektralbereich, dort insbesondere in einem Spektralbereich zwischen 750nm und 1100nm. Die projizierte Fläche 215 wird von dem Projektor 212 beleuchtet. Auf dieser Fläche 215 können dem Benutzer Zusatzinformationen dargestellt werden. Auch können dem Benutzer Funktionalitäten über virtuelle Felder dargestellt werden, die er mittels Gestenbedienung auslösen kann (vgl. zugehörige Beschreibung in Fig.1, insbesondere Feld F / Bedienung durch Hand H). Die Eigenlichtquelle 218 emittiert Licht in dem bevorzugten Spektralbereich zwischen 750nm und 1100nm. Durch die in diesem Wellenlängenbereich empfindliche Kamera 213 ergibt sich ein entsprechend gutes Detektionsergebnis.

### Interaktionsverfahren

Ein typisches Interaktionsverfahren zu der Anordnung von Fig.4 könnte wie folgt aussehen:
1. Der Benutzer deutet mit der Hand auf einen Teil des Modells, zum Beispiel auf den Turm auf der linken Seite.
2. Die Benutzerinteraktion (Deuten auf den Turm) wird von der Software erkannt und ausgewertet.
3. Von dem Projektor werden Informationen zum Turm projiziert. Im linken Teil der projizierten Abbildung (siehe Überlappungsbereich zwischen den Flächen 214 und 215) werden dem Benutzer weitere Schaltflächen angeboten, deren Betätigung jeweils vorgegebene Aktionen auslöst. Ein Auslösemechanismus ist das Zeigen des Benutzers mit seiner Hand als Zeigereinheit auf eine der Schaltflächen. Nach einer vorgegebenen Zeitdauer des Zeigens wird die mit der Schaltfläche assoziierte Aktion ausgelöst. Bevorzugt liegen die Schaltflächen daher in dem von der Kamera erfaßten Bereich 214.
4. Der Benutzer löst eine weitere Interaktion aus, indem er auf die Interaktionsfläche (Schaltfläche) deutet und dort für eine vorgegebene Zeitdauer verweilt. Nach Auswertung dieser Interaktion durch den Rechner werden beispielsweise weitere Detailinformationen zum Turm dargestellt (auf der Projektionsfläche 215).

### Materialien

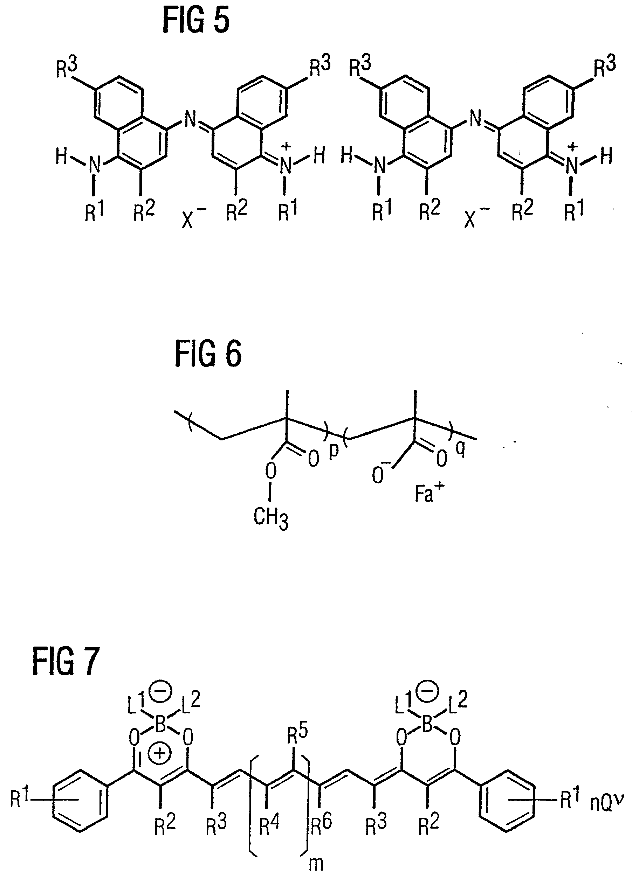

Als Material, das von der Lichtquelle emittiertes Licht im nichtsichtbaren Spektralbereich bei mindestens einer Wellenlänge (stark) absorbiert, können insbesondere eingesetzt werden:
1. Glas, Keramik:
   Gegebenenfalls kann das Glas/Keramik mit zusätzlichen Schichten versehen sein, die die optischen wie auch die mechanischen Eigenschaften verändern. Beispiele sind Antireflexschichten oder schmutzabweisende Beschichtungen.
2. Kunststoffe:
   Die Kunststoffe können gegebenenfalls aus mehreren
   Komponenten bestehen ("Blends") und/oder weitere organische oder anorganische Hilfsstoffe enthalten (anorganische Hilfsstoffe wie Pigmente, Füllstoffe,
   Glaspartikel etc.; organische Hilfsstoffe wie Pigmente,
   Farbstoffe, Füllstoffe, UV-Absorber, Stabilisatoren,
   Weichmacher etc.).
3. Farbstoffe:
   Besonders bevorzugt werden Farbstoffe der chemischen
   Grundstruktur von **Fig.5**, sogenannte Indaminfarbstoffe, verwendet.

   In Fig.5 gilt folgendes:
   - R¹ =: Alkyl (C₁-C₁₀) oder Phenyl;
   - R¹ and R²: bilden bevorzugt eine gesättigte cyclische Struktur (CH₂)ᵣ, insbesondere mit r=3;
   - R² =: H, Alkyl (C₁-C₁₀)oder Phenyl.
   - R³ =: H, OR⁴ oder SO₃R⁵ mit R⁴ und R⁵ = H oder Alkyl (C1-C10)
   - X⁻: ist das Anion einer Mineralsäure, bevorzugt Perchlorat, oder das Polyanion der Grundstruktur nach Formel gemäß **Fig.6**.

   In Fig.6 steht Fa⁺ für das Kation eines Indamin-Farbstoffs; P und q sind sich zu 1 ergänzende Verhältnisse der Methacrylatkomponenten in Copolymeren.
   Außerdem können bevorzugt Polymethin-Farbstoffe verwendet werden, die mindestens einen 1,3,2-Dioxaborin-Ring enthalten.

In **Fig.7** ist die Grundstruktur von Polymethinfarbstoffen dargestellt, folgendes gilt:
- L¹ und L²,: die gleich oder verschieden sein können, bedeuten Aryl, Halogen, Alkoxy, Aryloxy, Acyloxy, oder beide gemeinsam eine Gruppierung der allgemeinen Formel O-R⁹-R¹⁰-O mit der weiter unten genannten Bedeutung für R⁹ und R¹⁰,
- Q ist: ein bestimmtes, nachfolgend näher beschriebenes Atom- oder Molekülfragment mit der Ladung ν,
- n ist: eine ganze Zahl, deren Wert so beschaffen ist, daß die Gesamtladung der Verbindung Null wird, und
- M ist: eine ganze Zahl, die größer oder gleich Null ist.

Die Reste R¹ bis R⁶ stehen für Wasserstoff oder haben folgende Bedeutung:
- R¹ =: Alkyl (C₁-C₁₀), Aryl, Alkoxy, Aryloxy, Acyloxy, Alkylmercapto, Arylmercapto, Halogen, Nitro, Dialkylamino, Alkylarylamino, Trialkylammonium, Dialkylarylammonium, Alkyldiarylammonium, Dialkylsulfonium, Alkylarylsulfonium, Diarylsulfonium, Trialkylphosphonium, Dialkylarylphosphonium, Alkyldiarylphosphonium, Triarylphosphonium, Alkylsulfonyl, Arylsulfonyl, durch Alkyl oder Aryl substituiertes Benzyl oder Naphthyl, eine Amino- oder Ammoniumgruppierung, deren N-Atom Bestandteil eines heterocyclischen Ringes, wie Pyrroldino, Piperidino, Morpholino, ist, Sulfonium, deren S-Atom Bestandteil eines heterocyclischen Ringes, wie Thiolanyl oder Thiopyranyl, ist, Arylazo;
- R² und R³ =: die gleich oder verschieden sein können, Alkyl (C₁-C₁₀), Aryl, Halogen, Alkoxy, Aryloxy, Alkylmercapto, Arylmercapto, oder beide gemeinsam eine Alkylengruppierung, die zwei oder mehr als zwei Methylengruppen enthält;
- R⁴ und R⁶ =: die gleich oder verschieden sein können, Alkyl (C₁-X₁₀), Aryl, Halogen, Alkoxy, Aryloxy, Alkylmercapto, Arylmercapto, oder beide gemeinsam eine Alkylengruppierung, die aus zwei oder mehr Methylengruppen besteht;
- R⁵ =: Alkyl (C₁-C₁₀), Aryl, Halogen, Alkoxy, Aryloxy, Alkylmercapto, Arylmercapto, einen unsubstituierten oder durch eine Alkyl-, Aryl-, Alkoxy-, Aryloxy-, Alkylmercapto-, Arylmercapto-, Amino-, Alkylamino-, Dialkylamino-, Arylamino-, Diarylamino-, Alkylarylamino-Gruppierung substituierte Pyridinium-, Chinolinium-, Isochinolinium-, Thiazolium-, Benzthiazolium-, Oxazolium-, Benzoxazolium-, N,N-Dialkylimidazolium-, N,N-Dialkylbenzimidazolium-Gruppierung;
- Q mit v=-1,: Halogenid, Perchlorat, Tetrafluoroborat, Hexafluoroantimonat, Tetrachloroferrat, Tetraphenylborat,
- Q mit v=+1,: Trialkylammonium, Dialkylarylammonium, Alkyldiarylammonium, Dialkylsulfonium, Alkylarylsulfonium, Diarylsulfonium, Trialkylphosphonium, Dialkylarylphosphonium, Alkyldiarylphosphonium, Triarylphosphonium,
- R⁷ und R⁸ =: 1,2-Ethylen, 1,3-Propylen, CO-CO,1,2-C₆H₄-CO, 1,2-C₁₀H₆-CO, 2,3-C₁₀H₆-CO, 1,2-Bisalkoxycarbonyl-1,2-ethylen, 1,3-Bisalkoxy-1,3-propylen.

Die Alkylgruppierungen können z.B. Methyl, Ethyl, Propyl, Butyl, Isobutyl, sec-Butyl, tert.-Butyl, Pentyl, Isopentyl, Neopentyl, Hexyl, oder Isohexyl sowie Cyclopentyl, Cyclohexyl, Benzyl, substituiertes Benzyl, Alkoxymethyl, Alkoxyethyl mit der vorstehend aufgegebenen Bedeutung für Alkyl sein und die Arylgruppen können z.B. Phenyl, Naphthyl, Anthryl oder einen durch R¹ bis R⁶ substituierten Phenyloder Naphthylrest bedeuten.

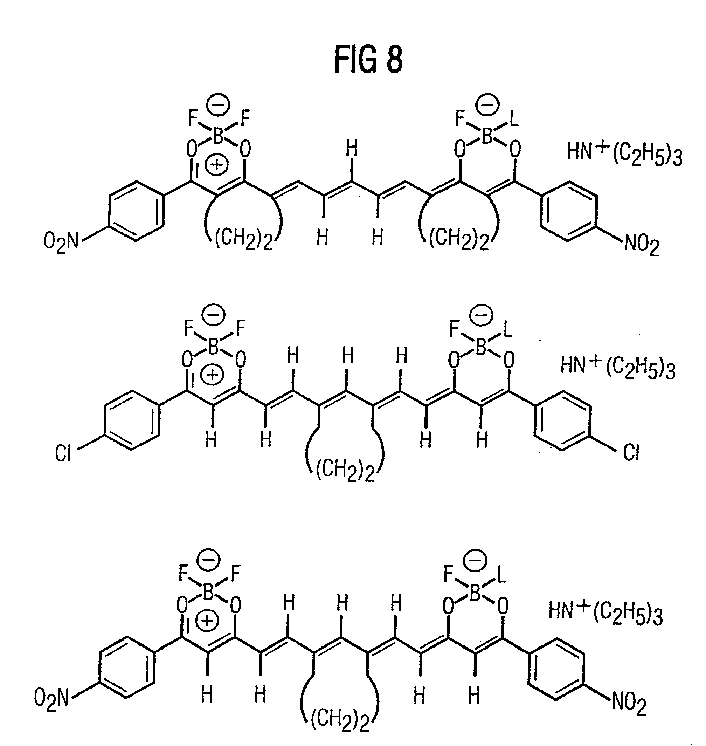

In **Fig.8** sind einige Beispiele für Farbstoffe dargestellt, die im nahen infraroten Spektralbereich intensiv absorbieren, im sichtbaren Spektralbereich jedoch vergleichsweise transparent erscheinen. Diese Farbstoffe weisen in erfindungsgemäßen Anordnungen sehr gute Eigenschaften auf, d.h. die Erkennungssicherheit eines Objektes (z.B. Hand) vor einer Oberfläche ist sehr hoch.
- Die Indamin-Farbstoffe wie auch die Polymethin-Farbstoffe können polymer-dispergiert in einer polymeren Matrix vorliegen. Als Matrix können bekannte polare Gruppen enthaltende Polymere wie beispielsweise Polyimide, Polyamide, Polysulfone, Polyester und Polyolefine verwendet werden.
- Als Matrix können auch handelsübliche Lacke verwendet werden, die eine ausreichende Mischbarkeit mit dem jeweils verwendeten Farbstoff aufweisen. Gegebenenfalls können auch eines oder mehrere Hilfs-Lösungsmittel eingesetzt werden.
- Die Farbstoffe können chemisch gebunden an das Matrix-Polymer vorliegen. Hierin eingeschlossen sind Hauptgruppen-Polymere ebenso wie Seitengruppen-Polymere.
- Sowohl Farbstoffe als auch Matrix können zur Vernetzung mit aktinischer Strahlung befähigte chemische Gruppen tragen. Unter aktinischer Strahlung wird Strahlung verstanden, die eine chemische Reaktion initiieren kann (Elektronenstrahlen, Röntgenstrahlen, sichtbares Licht, Ultraviolett-Strahlung, infrarotes Licht usw.). Die initiierten chemischen Reaktionen umfassen Polyreaktionen (Vernetzungen) ebenso wie polymeranaloge Reaktionen.

Die Auftragung der Absorber-Schicht erfolgt bevorzugt durch Spritzverfahren (Luftdruck-Spritzpistole, Aerosol-Verfahren) und/oder durch Gieß-/Tauchverfahren.

### Herstellung einer IR-Absorberschicht:

Es wird folgender Indamin-Farbstoff verwendet (siehe Fig.5): R¹ und R² bilden eine gesättigte cyclische Struktur (CH₂)ᵣ mit r=3, X⁻ steht für das Perchlorat-Anion, R³ = H. 0,4g dieses Indamin-Farbstoffes werden in 160,0g N,N-Dimethylformamid unter leichtem Erwärmen gelöst. Die Lösung wird unter Rühren in 320g handelsüblichen Zaponlack gegeben. Diese Mischung wird durch Spritzen mit Druckluft auf eine Struktur und ggf. auf die Oberfläche aufgebracht. Die Schicht erscheint im sichtbaren Licht nahezu transparent; im infraroten Licht erscheint die Schicht bei Einsatz eines geeigneten Detektors (im Spektrum des infraroten Lichts empfindliche Videokamera) schwarz. Dabei kann die Geste des Benutzers, insbesondere seine Hand oder sein Finger, auch bei starkem Fremdlichteinfall hervorragend erkannt werden.

### Anpassung des Absorptionsspektrums an das Emissionsspektrum:

1. Ein handelsüblicher Detektor (Videokamera) weist bei Infrarotlicht kleiner Wellenlänge (IR-Licht mit Wellenlänge möglichst nahe am sichtbaren Spekralbereich) eine hohe Empfindlichkeit auf. Deshalb ist es vorteilhaft, Eigenlichtquellen zu verwenden, die dementsprechend kleine Wellenlängen emittieren.
   Vor dem Detektor wird mindestens ein optischer Filter angebracht, dessen spektrale Charakteristik an die Emissionscharakteristik der verwendeten Eigenlichtquelle angepaßt ist. Dabei kann ein sogenannter "Kantenfilter" eingesetzt werden, also ein optisches Filter, der in einem Spektralbereich eine nahezu konstante und hohe Transmission aufweist (typischerweise 60% bis 80%), während es in anderen Spektralbereichen eine signifikant niedrige Transmission aufweist (typischerweise <1%). Der Übergang zwischen diesen beiden Spektralbereichen ist "steil", d.h. der Übergang selbst findet in einem kleinen Wellenlängenbereich statt (typischerweise 10nm bis 30nm).
   1.1. Insbesondere wird ein Kantenfilter eingesetzt, dessen Übergangsbereich bei Wellenlängen liegt, die nur wenige Nanometer unterhalb des Maximums des Emissionsspektrums der Eigenlichtquelle liegt. Bei kleineren Wellenlängen weist der Kantenfilter eine kleinere Transmission auf, während bei Wellenlängen oberhalb des Übergangsbereichs vorteilhaft eine hohe Transmission vorherrscht.
   1.2. Es können auch mehrere Kantenfilter miteinander kombiniert eingesetzt werden. Dabei wird durch zwei Kantenfilter eine Charakteristik eines Bandpaßfilters erreicht mit folgenden Eigenschaften: Der Übergangsbereich eines Kantenfilters liegt wenig oberhalb des Maximums der Emissionswellenlänge der Eigenlichtquelle. Bei kleineren Wellenlängen sollte die Transmission möglichst hoch sein, während bei größeren Wellenlängen die Transmission niedrig sein sollte. Der Übergangsbereich eines weiteren Kantenfilters liegt wenig unterhalb der Emissionswellenlänge der Eigenlichtquelle. Bei kleineren Wellenlängen sollte die Transmission möglichst niedrig sein, während bei größeren Wellenlängen die Transmission hoch sein sollte.
   1.3. Alternativ können statt der Kantenfilter "optische Bandpaßfilter" eingesetzt werden, die bei der Wellenlänge der maximalen Emission der Eigenlichtquelle hohe Transmission aufweisen, während sie bei anderen Wellenlängen (größer und kleiner) niedrige Transmissionen haben.
   1.4. Insbesondere kann ein sogenannter "Interferenzfilter" eingesetzt werden. Bei dem Interferenzfilter kann der Transmissionsbereich (Breite und Mittelwellenlänge des Transmissionsbereichs) durch gezieltes Aufbringen mehrerer Schichten (geeignete Materialien, Schichtdicken und Depositionsverfahren) (genau) festgelegt werden. Der Transmissionsbereich umfaßt hier bevorzugt den Wellenlängenbereich, in dem die Eigenlichtquelle Wellen emittiert. Gegebenenfalls kann der Interferenzfilter mit einem Kantenfilter kombiniert werden.
2. Auch können solche Lichtquellen zur Emission gewählt werden, deren Emissionsspektrum möglichst schmalbandig ist, d.h. die eine Emissionscharakteristik mit einer kleinen Halbwertsbreite (FWHM = Full width half maximum) besitzen. Dazu sind besonders geeignet Eigenlichtquellen (Infrarot-Leuchtdioden) mit einer FWHM von ca. 70nm. Bevorzugt werden Infrarot-Leuchtdioden eingesetzt mit einer FWHM von ca.30 nm. Anstelle der Infrarot-Leuchtdioden können auch Infrarot-Laser bzw. Infrarot-Laserdioden eingesetzt werden. Solche weisen eine FWHM von ca.10nm auf. Ferner sind Laserdioden erhältlich, die eine FWHM von ca.5nm aufweisen.
3. In einem "absorbierenden Modus" wird die Emissionscharakteristik der Eigenlichtquelle an das Absorptionsspektrum des verwendeten Infrarot absorbierenden Farbstoffs angepaßt. Die Wellenlängen der maximalen Farbstoffabsorption und der maximalen Emission der Eigenlichtquelle sind gleich bzw. nur wenig verschieden (< 20nm - 30nm). Die Breite des Absorptionsbandes (FWHM) entspricht in etwa der FWHM der Eigenlichtquelle. Bevorzugt werden die spektralen Eigenschaften durch bekannte numerische Methoden wechselseitig angepaßt.
4. Insbesondere ist es von Vorteil, daß der Detektor (Objektiv der Videokamera) und die Eigenlichtquelle eng zueinander angeordnet sind. Insbesondere ist es von Vorteil, daß mehrere Infrarot-Leuchtdioden um das Objektiv der Videokamera angeordnet sind. Eine derartige ringförmige geometrische Ausprägung von Eigenlichtquelle und Detektor ist besonders dann vorteilhaft, wenn die Bedienoberfläche eine anisotrope Abstrahlcharakteristik aufweist.

Literaturverzeichnis:
[1] US 5,528,263
[2] DE 197 08 240

## Patentansprüche

1. Anordnung zur Detektion eines Objekts auf bzw. vor einer Oberfläche,
a) mit einer Empfangseinrichtung, die derart eingerichtet ist, daß sie das Objekt und die Oberfläche aufnimmt;
b) bei der ein Rechner vorgesehen ist, der derart eingerichtet ist, daß von dem Objekt reflektierte Wellen von Wellen unterscheidbar sind, die von der Oberfläche reflektiert werden;
c) bei der das Objekt auf bzw. vor der Oberfläche detektiert wird;
dadurch gegenzeichnet dass die Oberfläche eine höhere Absorption der Wellen aufweist als das Objekt.

2. Anordnung nach Anspruch 1,
bei der eine Einheit zur Beleuchtung der Oberfläche mit Wellen im nichtsichtbaren Spektralbereich vorgesehen ist.

3. Anordnung nach Anspruch 2,
bei der die Einheit zur Beleuchtung des Bereichs eine Infrarot-Lichtquelle umfaßt.

4. Anordnung nach Anspruch 3,
bei der die Infrarot-Lichtquelle eine der folgenden Komponenten ist:
a) eine Infrarot-Leuchtdiode;
b) eine Glühbirne mit Infrarot-Filter;
c) Laserdiode oder Laser.

5. Anordnung nach einem der vorhergehenden Ansprüche,
bei der die Empfangseinrichtung eine Kamera ist.

6. Anordnung nach einem der vorhergehenden Ansprüche,
bei der die Empfangseinrichtung ein Filter, der nur für Wellen im nichtsichtbaren Spektralbereich durchlässig ist, aufweist.

7. Anordnung nach einem der vorhergehenden Ansprüche,
bei der ein Projektor vorgesehen ist, der ein Videobild auf die Oberfläche projiziert.

8. Anordnung nach Anspruch 7,
bei der das Videobild eine Bedienoberfläche ist.

9. Anordnung nach Anspruch 8,
bei der das Objekt eine Eingabekomponente für die Bedienoberfläche ist.

10. Anordnung nach einem der vorhergehenden Ansprüche,
bei der das Objekt
a)eine Hand eines Benutzers oder
b)ein Finger eines Benutzers oder
c)ein Zeigereinheit
ist.

11. Anordnung nach einem der vorhergehenden Ansprüche,
bei der die Oberfläche eine dreidimensionale Struktur aufweist.

12. Anordnung nach einem der vorhergehenden Ansprüche,
bei der die Oberfläche in einem nicht sichtbaren Spektralbereich absorbierend und in einem sichtbaren Bereich reflektierend ausgeführt ist.

13. Anordnung nach den Ansprüchen 2 und 12,
bei der die Oberfläche bei mindestens einer von der Lichtquelle emittierten Wellenlänge eine höhere Absorption aufweist als das zu erkennende Objekt und bei der die Oberfläche bei mindestens einer sichtbaren Wellenlänge eine höhere Reflektivität aufweist als das zu erkennende Objekt.

14. Anordnung nach einem der vorhergehenden Ansprüche,
bei der die Oberfläche mit einer Absorptionsschicht überzogen ist.

15. Anordnung nach einem der vorhergehenden Ansprüche,
bei der auf der Oberfläche Strukturen vorgesehen sind.

16. Anordnung nach Anspruch 15,
bei der die Strukturen mit einer Absorptionsschicht überzogen sind.

17. Anordnung nach Anspruch 14 oder 16,
bei der die Absorptionsschicht anhand einer der folgenden Möglichkeiten erstellt wird:
a) Glas;
b) Keramik;
c) Kunststoffe;
d) Farbstoffe;
e) organische Pigmente;
f) anorganische Pigmente.

18. Anordnung nach einem der vorhergehenden Ansprüche,
bei der das Emissionsspektrum der Beleuchtungseinheit im nichtsichtbaren Spektralbereich auf das Spektrum der Absorption angepaßt ist.

19. Anordnung nach einem der vorhergehenden Ansprüche,
bei der die Wellen im nichtsichtbaren Spektralbereich von einer Infrarotlichtquelle stammen.

20. Anordnung nach Anspruch 17,
bei der die Absorberschicht einen Farbstoff enthält, wobei der molare Extinktionskoeffizient des Farbstoffs bei mindestens einer Wellenlänge zwischen 750nm und 1100nm mindestens fünfmal höher ist als der größte Wert im Wellenlängenbereich zwischen 400nm und 700nm.

21. Anordnung nach Anspruch 17,
bei der Farbstoffe mit Indamin-Grundstruktur verwendet werden.

22. Anordnung nach Anspruch 17,
bei der Polymethinfarbstoffe mit 1,3,2-Dioxaborinstrukturen verwendet werden.

23. Anordnung nach Anspruch 14 oder 16,
bei der die Absorberschicht polymer-dispergierte Farbstoffe in einer polymeren Matrix enthält.

24. Anordnung nach Anspruch 14, 16 oder 23,
bei der als Matrix polare Gruppen enthaltende Polymere wie Polyimide, Polyamide, Polysulfone, Polyester und Polyolefine verwendet werden.

25. Anordnung nach Anspruch 14 oder 16,
bei der die Absorberschicht Farbstoffe enthält, die chemisch gebunden an ein Matrix-Polymer vorliegen.

26. Anordnung nach Anspruch 14 oder 16,
bei der Farbstoff und/oder Matrix zur Vernetzung mit aktinischer Strahlung befähigte chemische Gruppen tragen.

## Claims

1. Arrangement for detecting an object on or in front of a surface,
a) with a receiving device, which is set up in such a way that it records the object and the surface;
b) in which a computer is provided, which is set up in such a way that waves reflected by the object can be distinguished from waves which are reflected by the surface;
c) in which the object is detected on or in front of the surface;
**characterized in that** the surface has a higher absorption for the waves than the object does.

2. Arrangement according to Claim 1, in which a unit is provided for illuminating the surface with waves in the invisible spectral range.

3. Arrangement according to Claim 2, in which the unit for illuminating the region comprises an infrared light source.

4. Arrangement according to Claim 3, in which the infrared light source is one of the following components:
a) an infrared light-emitting diode;
b) an incandescent lamp with an infrared filter;
c) laser diode or laser.

5. Arrangement according to one of the preceding claims, in which the receiving device is a camera.

6. Arrangement according to one of the preceding claims, in which the receiving device has a filter which is transparent only for waves in the invisible spectral range.

7. Arrangement according to one of the preceding claims, in which a projector is provided, which projects a video image onto the surface.

8. Arrangement according to Claim 7, in which the video image is a user interface.

9. Arrangement according to Claim 8, in which the object is an input component for the user interface.

10. Arrangement according to one of the preceding claims, in which the object is
a) a user's hand or
b) a user's finger or
c) a pointer unit.

11. Arrangement according to one of the preceding claims, in which the surface has a three-dimensional structure.

12. Arrangement according to one of the preceding claims, in which the surface is designed to be absorbent in an invisible spectral range and reflective in a visible range.

13. Arrangement according to Claims 2 and 12, in which the surface has a higher absorption at at least one wavelength emitted by the light source than the object to be detected does, and in which the surface has a higher reflectivity at at least one visible wavelength than the object to be detected does.

14. Arrangement according to one of the preceding claims, in which the surface is coated with an absorption layer.

15. Arrangement according to one of the preceding claims, in which structures are provided on the surface.

16. Arrangement according to Claim 15, in which the structures are coated with an absorption layer.

17. Arrangement according to Claim 14 or 16, in which the absorption layer is made by using one of the following options:
a) glass;
b) ceramic;
c) plastics;
d) dyes;
e) organic pigments;
f) inorganic pigments.

18. Arrangement according to one of the preceding claims, in which the emission spectrum of the illumination unit in the invisible spectral range is matched to the spectrum of the absorption.

19. Arrangement according to one of the preceding claims, in which the waves in the invisible spectral range come from an infrared light source.

20. Arrangement according to Claim 17, in which the absorber layer contains a dye, the molar extinction coefficient of the dye at at least one wavelength between 750 nm and 1100 nm being at least five times higher than the maximum value in the wavelength range between 400 nm and 700 nm.

21. Arrangement according to Claim 17, in which dyes with an indamine base structure are used.

22. Arrangement according to Claim 17, in which polymethine dyes with 1,3,2-dioxaborine structures are used.

23. Arrangement according to Claim 14 or 16, in which the absorber layer contains polymer-dispersed dyes in a polymer matrix.

24. Arrangement according to Claim 14, 16 or 23, wherein polymers containing polar groups, such as polyimides, polyamides, polysulphones, polyesters and polyolefins, are used as the matrix.

25. Arrangement according to Claim 14 or 16, in which the absorber layer contains dyes which are chemically bound to a polymer matrix.

26. Arrangement according to Claim 14 or 16, in which the dye and/or matrix carry chemical groups compatible with crosslinking by actinic radiation.

## Revendications

1. Dispositif de détection d'un objet sur resp. devant une surface,
a) avec un dispositif de réception réglé de manière à enregistrer l'objet et la surface ;
b) dans lequel un ordinateur est prévu, qui est réglé de manière à pouvoir différencier les ondes réfléchies par l'objet des ondes réfléchies par la surface
c) dans lequel l'objet est détecté sur resp. devant la surface ;
**caractérisé en ce que** la surface présente une absorption des ondes supérieures à l'objet.

2. Dispositif selon la revendication 1, dans lequel est prévue une unité d'éclairage de la surface avec des ondes dans le domaine spectral invisible.

3. Dispositif selon la revendication 2, dans lequel l'unité d'éclairage du domaine comprend une source de lumière infrarouge.

4. Dispositif selon la revendication 3, dans lequel la source de lumière infrarouge est l'un des composants suivants :
a) une diode électroluminescente infrarouge ;
b) une ampoule à filtre infrarouge ;
c) une diode à laser ou un laser.

5. Dispositif selon Tune des revendications précédentes, dans lequel le dispositif de réception est une caméra.

6. Dispositif selon Tune des revendications précédentes, dans lequel le dispositif de réception comprend un filtre perméable uniquement pour les ondes du domaine spectral invisible.

7. Dispositif selon l'une des revendications précédentes, dans lequel un projecteur est prévu, qui projette une image vidéo sur la surface.

8. Dispositif selon la revendication 7, dans lequel l'image vidéo est une interface utilisateur.

9. Dispositif selon la revendication 8, dans lequel l'objet est un composant d'entrée de données pour l'interface utilisateur.

10. Dispositif selon l'une des revendications précédentes, dans lequel l'objet est
a) une main d'un utilisateur ou
b) un doigt d'un utilisateur ou
c) une unité de pointage

11. Dispositif selon l'une des revendications précédentes, dans lequel la surface comprend une structure tridimensionnelle.

12. Dispositif selon l'une des revendications précédentes, dans lequel la surface est conçue comma étant absorbante dans un domaine spectral invisible et réfléchissante dans un domaine visible.

13. Dispositif selon l'une des revendications 2 et 12, dans lequel la surface avec au moins une des longueurs d'ondes émise par la source lumineuse présente une absorption supérieure à l'objet à détecter et dans lequel la surface avec au moins une longueur d'ondes visible présente une réflectivité supérieure à l'objet à détecter.

14. Dispositif selon l'une des revendications précédentes, dans lequel la surface est recouverte dune couche absorbante.

15. Dispositif selon l'une des revendications précédentes clans lequel des structures sont prévues à la surface.

16. Dispositif selon la revendication 15, clans lequel les structures sont recouvertes dune couche absorbante.

17. Dispositif selon la revendication 14 ou 16, dans lequel la couche absorbante est réalisée selon Tune des possibilités suivantes :
a) verve ;
b) céramique ;
c) matières plastiques ;
d) colorants ;
e) pigments organiques ;
f) pigments minéraux.

18. Dispositif selon l'une des revendications précédentes, dans lequel le spectre d'émission de l'unité d'éclairage est adapté au spectre d'absorption dans le domaine spectral invisible.

19. Dispositif selon l'une des revendications précédentes, dans lequel les ondes dans le domaine spectral invisible proviennent dune source de lumière infrarouge.

20. Dispositif selon la revendication 17, dans lequel la couche absorbante contient un colorant, le coefficient d'extinction molaire du colorant avec au moins une longueur d'ondes comprise entre 750 nm et 1100 nm étant au moins cinq fois supérieur à la plus grande valeur dans la plage de longueurs d'ondes comprises entre 400 nm et 700 nm.

21. Dispositif selon la revendication 17, dans lequel des colorants à structure de base indamine sont utilisés.

22. Dispositif selon la revendication 17, dans lequel des colorants polyméthines à structures de 1, 3, 2-dioxaborine sont utilisés.

23. Dispositif selon la revendication 14 ou 16, dans lequel la couche absorbante contient des colorants dispersés dans des polymères dans une matrice polymère.

24. Dispositif selon la revendication 14, 16 ou 23, dans lequel des polymères contenant des groupes polaires comme les polyimides, polyamides, polysulfones, polyesters et polyoléfines sont utilisés comme matrice.

25. Dispositif selon la revendication 14 ou 16, dans lequel la couche absorbante contient des colorants liés chimiquement à un polymère matriciel.

26. Dispositif selon la revendication 14 ou 16, dans lequel le colorant et/ou la matrice porte des groupements chimiques capables de réticuler avec un rayonnement actinique.
